# EUROPEAN PATENT APPLICATION

(11) **EP 4 362 545 A1**
(43) Date of publication of application: **01.05.2024**
(21) Application number: 21946445.0
(22) Date of filing: 24.06.2021
(51) Int. Cl.: H04W 36/00, H04B 7/185

(54) **BEAM SWITCHING METHOD AND APPARATUS, USER EQUIPMENT, BASE STATION AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: dompatent von Kreisler Selting Werner - Partnerschaft von Patent- und Rechtsanwälten mbB
(86) International application number: PCT/CN2021/102139
(87) International publication number: WO 2022/266949

(57) **Abstract**

The present disclosure provides a beam switching method and apparatus, a user equipment, a base station and a storage medium, and belongs to the technical field of communications. The method comprises: satellite UE acquires a target beam and/or a target bandwidth part (BWP) corresponding to the satellite UE as indicated by a base station, and performs service beam switching on the basis of the target beam and/or the target BWP. Therefore, the beam switching method provided in the present disclosure can quickly and accurately switch beams in an NTN system, thereby ensuring service continuity and having high efficiency.

## Description

### TECHNICAL FIELD

The present disclosure relates to the field of communication technology, and more particularly to a beam switching method and apparatus, a user equipment, a base station and a storage medium.

### BACKGROUND

The non-terrestrial network (NTN) system is widely used in the communication field due to its wide coverage, strong disaster resistance and large capacity. However, how to achieve an efficient beam switching in the NTN system is an urgent problem to be solved.

### SUMMARY

The present disclosure provides a beam switching method and apparatus, a user equipment, a base station and a storage medium to provide an efficient beam switching method applied in an NTN system.

Embodiments of a first aspect of the present disclosure provide a beam switching method, which is performed by a satellite user equipment (UE) and includes: obtaining a target beam and/or a target bandwidth part (BWP) corresponding to the satellite UE indicated by a base station; and performing a service beam switching based on the target beam and/or the target BWP.

Embodiments of a second aspect of the present disclosure provide a beam switching method, which is performed by a base station and includes: indicating a target beam and/or a target BWP corresponding to a satellite UE to the satellite UE.

Embodiments of a third aspect of the present disclosure provide a beam switching apparatus, which includes: an obtaining module configured to obtain a target beam and/or a target bandwidth part (BWP) corresponding to a satellite UE indicated by a base station; and a switching module configured to perform a service beam switching based on the target beam and/or the target BWP.

Embodiments of a fourth aspect of the present disclosure provide a beam switching apparatus, which includes: an indicating module configured to indicate a target beam and/or a target BWP corresponding to a satellite UE to the satellite UE.

Embodiments of a fifth aspect of the present disclosure provide a user equipment, which includes: a transceiver; a memory; and a processor. The processor is connected to the transceiver and the memory respectively, and configured to control a transmission and a reception of a wireless signal of the transceiver and enable the method according to embodiments of the first aspect to be implemented by executing computer-executable instructions on the memory.

Embodiments of a sixth aspect of the present disclosure provide a base station, which includes: a transceiver; a memory; and a processor. The processor is connected to the transceiver and the memory respectively, and configured to control a transmission and a reception of a wireless signal of the transceiver and enable the method according to embodiments of the second aspect to be implemented by executing computer-executable instructions on the memory.

Embodiments of a seventh aspect of the present disclosure provide a computer storage medium having stored therein computer-executable instructions that, when executed by a processor, enable the method described above to be implemented.

In summary, in the beam switching method and apparatus, the user equipment, the base station and the storage medium according to embodiments of the present disclosure, the satellite UE may obtain the target beam and/or the target BWP corresponding to the satellite UE indicated by the base station, and perform the service beam switching based on the target beam and/or the target BWP. As a result, the beam switching may be performed quickly and accurately in an NTN system, ensuring a service continuity with a high efficiency.

Additional aspects and advantages of present disclosure will be given in part in the following descriptions, become apparent in part from the following descriptions, or be learned from the practice of the present disclosure.

### BRIEF DESCRIPTION OF THE DRAWINGS

The above and/or additional aspects and advantages of embodiments of the present disclosure will become apparent and more readily appreciated from the following descriptions on embodiments of the present disclosure made with reference to the drawings, in which:
FIG. 1 is a schematic flowchart of a beam switching method according to an embodiment of the present disclosure;
FIG. 2 is a schematic flowchart of a beam switching method according to another embodiment of the present disclosure;
FIG. 3 is a schematic flowchart of a beam switching method according to another embodiment of the present disclosure;
FIG. 4 is a schematic flowchart of a beam switching method according to another embodiment of the present disclosure;
FIG. 5 is a schematic flowchart of a beam switching method according to another embodiment of the present disclosure;
FIG. 6 is a schematic flowchart of a beam switching method according to another embodiment of the present disclosure;
FIG. 7 is a schematic flowchart of a beam switching method according to another embodiment of the present disclosure;
FIG. 8 is a schematic flowchart of a beam switching method according to another embodiment of the present disclosure;
FIG. 9 is a schematic block diagram of a beam switching apparatus according to an embodiment of the present disclosure;
FIG. 10 is a schematic block diagram of a beam switching apparatus according to another embodiment of the present disclosure;
FIG. 11 is a block diagram of a user equipment according to an embodiment of the present disclosure; and
FIG. 12 is a block diagram of a base station according to an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present disclosure. Instead, they are merely examples of devices and methods consistent with some aspects of embodiments of the present disclosure as recited in the appended claims.

Terms used in embodiments of the present disclosure are only for the purpose of describing specific embodiments, but should not be construed to limit the present disclosure. As used in embodiments of the present disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if' may be construed to mean "when" or "upon" or "in response to determining" depending on the context.

Embodiments of the present disclosure will be described in detail bellow, examples of which are illustrated in the accompanying drawings. Throughout the descriptions, the same or similar elements are denoted by the same or like reference numerals. Embodiments described below with reference to drawings are explanatory, serve to explain the present disclosure, and cannot be construed to limit embodiments of the present disclosure.

In a beam switching method according to embodiments of the present disclosure, a satellite UE may obtain a target beam and/or a target BWP corresponding to the satellite UE indicated by a base station, and perform a service beam switching based on the target beam and/or the target BWP. As a result, the beam switching may be performed quickly and accurately in an NTN system, ensuring a service continuity with a high efficiency.

A beam switching method and apparatus, a user equipment, a base station and a storage medium according to the present disclosure will be described in detail below with reference to accompanying drawings.

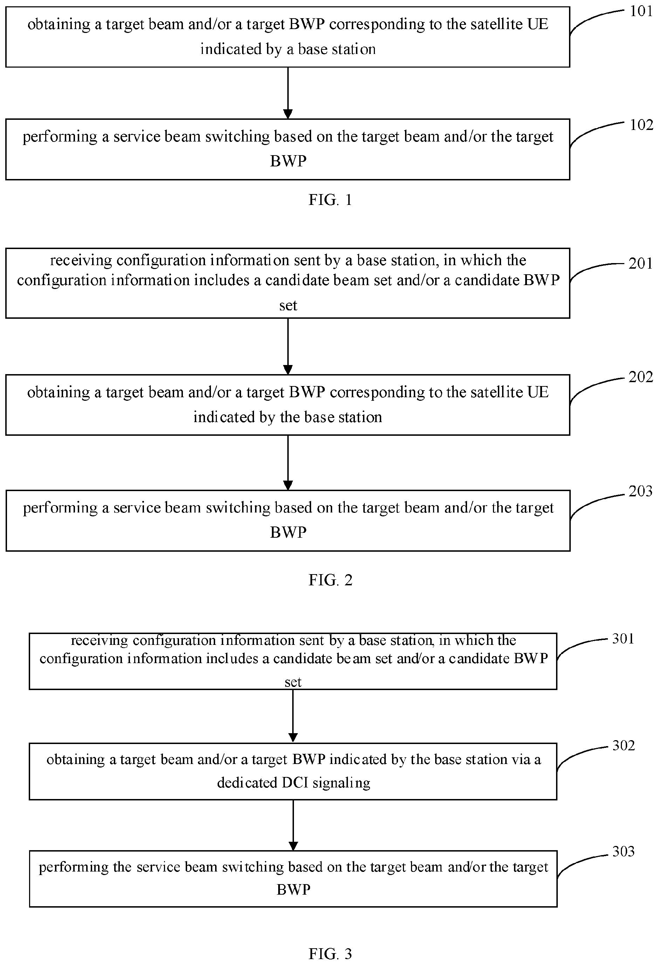

FIG. 1 is a schematic flowchart of a beam switching method according to an embodiment of the present disclosure, which is performed by a satellite user equipment (UE). As shown in FIG. 1, the beam switching method may include the following steps.

In step 101, a target beam and/or a target bandwidth part (BWP) corresponding to the satellite UE indicated by a base station are obtained.

It should be noted that an indication method according to embodiments of the present disclosure may be performed by any satellite UE. The satellite UE may refer to a device that provides a voice and/or a data connectivity to a user. The satellite UE may communicate with one or more core networks via a radio access network (RAN). The satellite UE may be an Internet of Things terminal, such as a sensor device, a mobile phone (or a "cellular" phone), and a computer with the Internet of Things terminal, for example, the satellite UE may be a fixed, portable, pocketsized, handheld, computer-built-in or vehicle-mounted apparatus, such as, a station (STA), a subscriber unit, a subscriber station, a mobile station, a mobile, a remote station, an access point, a remote terminal, an access terminal, a user terminal or a user agent. Alternatively, the satellite UE may also be a device of an unmanned aerial vehicle. Alternatively, the satellite UE may also be a vehicle-mounted device, for example, may be a driving computer with a wireless communication function, or a wireless terminal connected to an external driving computer. Alternatively, the satellite UE may also be a roadside device, for example, may be a street light, a signal light or other roadside devices with a wireless communication function.

In an embodiment of the present disclosure, the target beam indicated by the base station may be a certain service beam among a plurality of service beams within a coverage area of a satellite corresponding to the satellite UE, and the target BWP indicated by the base station may be a BWP corresponding to a certain service beam among the plurality of service beams within the coverage area of the satellite corresponding to the satellite UE. In another embodiment of the present disclosure, the target beam indicated by the base station may be a certain service beam among a plurality of service beams within a coverage area of other satellites, and the target BWP indicated by the base station may be a BWP corresponding to a certain service beam among the plurality of service beams within the coverage area of other satellites. For example, in an embodiment of the present disclosure, the certain service beam may be, for example, an adjacent service beam to a current service beam of the satellite UE.

In an embodiment of the present disclosure, a method for the satellite UE to obtain the target beam and/or the target BWP indicated by the base station may include: obtaining the target beam and/or the target BWP indicated by the base station via a downlink control information (DCI) signaling.

Specifically, in an embodiment of the present disclosure, the satellite UE may obtain the target beam and/or the target BWP indicated by the base station via a dedicated DCI signaling (for example, a scheduling indication). In another embodiment of the present disclosure, the satellite UE may obtain the target beam and/or the target BWP indicated by the base station via a common DCI signaling (for example, a common signaling). In an embodiment of the present disclosure, the common DCI signaling may specifically be a signaling for a group of satellite UEs. That is, the common DCI signaling may be used to indicate the target beam and/or the target BWP to a group of satellite UEs, and the group of satellite UEs may include at least one satellite UE.

Further, it should be noted that, in an embodiment of the present disclosure, the base station may only indicate the target beam. In another embodiment of the present disclosure, the base station may only indicate the target BWP. In another embodiment of the present disclosure, the base station may indicate the target beam and the target BWP. When the base station indicates the target beam and the target BWP, in an embodiment of the present disclosure, a binding relationship may be present between the target beam and the target BWP. In an embodiment of the present disclosure, it is also possible that no binding relationship is present between the target beam and the target BWP.

Thereby, in an embodiment of the present disclosure, the satellite UE will only obtain the target beam indicated by the base station. In another embodiment of the present disclosure, the satellite UE will only obtain the target BWP indicated by the base station. In another embodiment of the present disclosure, the satellite UE will obtain the target beam and the target BWP that have the binding relationship indicated by the base station. In another embodiment of the present disclosure, the satellite UE will obtain the target beam and the target BWP that do not have the binding relationship indicated by the base station.

In step 102, a service beam switching is performed based on the target beam and/or the target BWP.

In an embodiment of the present disclosure, if the satellite UE only obtains the target beam indicated by the base station in the step 101, the satellite UE may perform the service beam switching based only on the target beam. In another embodiment of the present disclosure, if the satellite UE only obtains the target BWP indicated by the base station in the step 101, the satellite UE may perform the service beam switching based only on the target BWP. In another embodiment of the present disclosure, when the satellite UE obtains the target beam and the target BWP that have the binding relationship indicated by the base station in the step 101, the satellite UE may perform the service beam switching based on the target beam and the target BWP. In another embodiment of the present disclosure, when the satellite UE obtains the target beam and the target BWP that do not have the binding relationship indicated by the base station in the step 101, the satellite UE may perform the service beam switching based on any one of the target beam and the target BWP.

In summary, in the beam switching method according to embodiments of the present disclosure, the satellite UE may obtain the target beam and/or the target BWP corresponding to the satellite UE indicated by the base station, and perform the service beam switching based on the target beam and/or the target BWP, so that the beam switching may be performed quickly and accurately in an NTN system, ensuring a service continuity with a high efficiency.

FIG. 2 is a schematic flowchart of a beam switching method according to another embodiment of the present disclosure, which is performed by a satellite UE. As shown in FIG. 2, the beam switching method may include the following steps.

In step 201, configuration information sent by a base station is received, and the configuration information includes a candidate beam set and/or a candidate BWP set.

In an embodiment of the present disclosure, the configuration information may only include the candidate beam set. In another embodiment of the present disclosure, the configuration information may only include the candidate BWP set. In another embodiment of the present disclosure, the configuration information may include the candidate beam set and the candidate BWP set.

Further, in an embodiment of the present disclosure, when the configuration information includes the candidate beam set and the candidate BWP set, in case that a binding relationship is present between a candidate beam in the candidate beam set and a candidate BWP in the candidate BWP set, the configuration information may further include the binding relationship between the candidate beam and the candidate BWP.

It should be noted that when the configuration information includes the candidate beam set and the candidate BWP set, and the binding relationship is present between candidate beams and candidate BWPs, in an embodiment of the present disclosure, the binding relationship between the candidate beams and the candidate BWPs may be a one-to-one correspondence, for example, beam1 may be bound to BWP1. In another embodiment of the present disclosure, the binding relationship between the candidate beams and the candidate BWPs may be a one-to-many correspondence, for example, beam3 may be bound to both BWP4 and BWP5. In another embodiment of the present disclosure, the binding relationship between the candidate beams and the candidate BWPs may be a many-to-one correspondence, for example, both beam4 and beam5 may be bound to BWP6.

In step 202, a target beam and/or a target BWP corresponding to the satellite UE indicated by the base station are obtained.

In step 203, a service beam switching is performed based on the target beam and/or the target BWP.

For detailed introductions about the steps 202 to 203, reference may be made to the steps 101 to 102 in the above first embodiment, which will not be elaborated in embodiments of the present disclosure here.

In summary, in the beam switching method according to embodiments of the present disclosure, the satellite UE may obtain the target beam and/or the target bandwidth part (BWP) corresponding to the satellite UE indicated by the base station, and perform the service beam switching based on the target beam and/or the target BWP, so that the beam switching may be performed quickly and accurately in an NTN system, ensuring a service continuity with a high efficiency.

FIG. 3 is a schematic flowchart of a beam switching method according to another embodiment of the present disclosure, which is performed by a satellite UE. As shown in FIG. 3, the beam switching method may include the following steps.

In step 301, configuration information sent by a base station is received, and the configuration information includes a candidate beam set and/or a candidate BWP set.

When the configuration information includes the candidate beam set and the candidate BWP set, in case that a binding relationship is present between a candidate beam in the candidate beam set and a candidate BWP in the candidate BWP set, the configuration information further includes the binding relationship between the candidate beam and the candidate BWP.

For detailed introductions about the binding relationship for candidate BWPs in the candidate BWP set, reference may be made to the above embodiments, which will not be elaborated in embodiments of the present disclosure here.

In step 302, a target beam and/or a target BWP indicated by the base station via a dedicated DCI signaling are obtained.

In an embodiment of the present disclosure, a method for the satellite UE to obtain the target beam and/or the target BWP indicated by the dedicated DCI signaling may include: first obtaining detection information corresponding to the dedicated DCI signaling sent by the base station, and then detecting a latest dedicated DCI signaling obtained by the satellite UE based on the detection information to obtain the target beam and/or the target BWP indicated by the dedicated DCI signaling.

In an embodiment of the present disclosure, the detection information may include at least one of: a detection period, a detection time, an aggregation level, and a number of detections.

In an embodiment of the present disclosure, the detection information may only be any kind of the above detection information. In another embodiment of the present disclosure, the detection information may be a combination of any two kinds of the above detection information, a combination of any three kinds of the above detection information, or a combination of all the four kinds of the above detection information.

For example, in an embodiment of the present disclosure, it is assumed that the detection information includes the detection time, and the detection time is: performing a detection at 12:00 and 16:00 every day. Then, at 12:00 and 16:00 every day, the satellite UE may detect a current latest dedicated DCI signaling obtained to obtain the target beam and/or the target BWP indicated by the latest dedicated DCI signaling obtained.

Further, in an embodiment of the present disclosure, a method for indicating the target beam and/or the target BWP by the dedicated DCI signaling may include, but is not limited to, the following manners.

Specifically, in an embodiment of the present disclosure, the dedicated DCI signaling may explicitly indicate the target beam and/or the target BWP. In an embodiment of the present disclosure, an explicit indication method may be to directly use an information field in the dedicated DCI signaling to indicate the target beam and/or the target BWP.

Specifically, in an embodiment of the present disclosure, the dedicated DCI signaling may only explicitly indicate the target beam. In another embodiment of the present disclosure, the dedicated DCI signaling may only explicitly indicate the target BWP. In another embodiment of the present disclosure, the dedicated DCI signaling may explicitly indicate the target BWP and the target beam.

For example, the following descriptions are made with reference to an example where the dedicated DCI signaling explicitly indicates the target beam and the target BWP.

In an embodiment of the present disclosure, the dedicated DCI signaling may include a first information field and a second information field. The first information field may be used to indicate the target beam, and the second information field may be used to indicate the target BWP, then the base station may enable indication information of the target beam to appear in the first information field of the dedicated DCI signaling, and enable indication information of the target BWP to appear in the second information field of the dedicated DCI signaling. Therefore, after receiving the dedicated DCI signaling sent by the base station, the satellite UE may directly obtain the target beam indicated by the first information field of the dedicated DCI signaling and the target BWP indicated by the second information field of the dedicated DCI signaling.

In another embodiment of the present disclosure, the dedicated DCI signaling may implicitly indicate the target beam and/or the target BWP. In an embodiment of the present disclosure, an implicit indication method may be an implicit indication using a radio network temporary identifier (RNTI). In another embodiment of the present disclosure, the implicit indication method may be an implicit indication using a scrambling sequence.

Specifically, in an embodiment of the present disclosure, the dedicated DCI signaling may only implicitly indicate the target beam. In another embodiment of the present disclosure, the dedicated DCI signaling may only implicitly indicate the target BWP. In another embodiment of the present disclosure, the dedicated DCI signaling may implicitly indicate the target BWP and the target beam.

It should be noted that when the dedicated DCI signaling is used to implicitly indicate the target BWP and the target beam, in an embodiment of the present disclosure, an implicit indication manner of the target beam and an implicit indication manner of the target BWP may be the same. In another embodiment of the present disclosure, the implicit indication manner of the target beam may be different from the implicit indication manner of the target BWP.

Furthermore, in an embodiment of the present disclosure, the dedicated DCI signaling may jointly indicate the target beam and the target BWP using an explicit indication and an implicit indication.

Specifically, in an embodiment of the present disclosure, a method for obtaining the target beam and the target BWP jointly indicated by the dedicated DCI signaling using the explicit indication and the implicit indication may include: obtaining the target beam explicitly indicated by the dedicated DCI signaling and the target BWP implicitly indicated by the dedicated DCI signaling.

For example, in an embodiment of the present disclosure, the satellite UE may obtain the target beam explicitly indicated by a third information field of the dedicated DCI signaling, and obtain the target BWP implicitly indicated by the RNTI in the dedicated DCI signaling. Alternatively, in another embodiment of the present disclosure, the satellite UE may obtain the target beam explicitly indicated by the third information field of the dedicated DCI signaling, and obtain the target BWP implicitly indicated by the scrambling sequence in the dedicated DCI signaling.

In another embodiment of the present disclosure, obtaining the target beam and the target BWP jointly indicated by the dedicated DCI signaling using the explicit indication and the implicit indication may include: obtaining the target BWP explicitly indicated by the dedicated DCI signaling and the target beam implicitly indicated by the dedicated DCI signaling.

For example, in an embodiment of the present disclosure, the satellite UE may obtain the target BWP explicitly indicated by the third information field of the dedicated DCI signaling, and obtain the target beam implicitly indicated by the RNTI in the dedicated DCI signaling. Alternatively, in another embodiment of the present disclosure, the satellite UE may obtain the target BWP explicitly indicated by the third information field of the dedicated DCI signaling, and obtain the target beam implicitly indicated by the scrambling sequence in the dedicated DCI signaling.

Further, it should be noted that, in an embodiment of the present disclosure, when the base station indicates the target beam and/or the target BWP via the dedicated DCI signaling, the dedicated DCI signaling may further include first time indication information, and the first time indication information is configured to indicate an execution time of a service beam switching. Subsequently, the satellite UE may perform the service beam switching based on the first time indication information.

In step 303, a service beam switching is performed based on the target beam and/or the target BWP.

It should be noted that, in an embodiment of the present disclosure, the satellite UE may obtain the first time indication information indicated by the base station via the dedicated DCI signaling, and perform the service beam switching based on the target beam and/or the target BWP at a time indicated by the first time indication information.

Specifically, in an embodiment of the present disclosure, after receiving the first time indication information indicated by the base station, the satellite UE may determine the execution time of the service beam switching based on the first time indication information, and perform the service beam switching based on the target beam and/or the target BWP indicated by the base station when a current time reaches the execution time of the service beam switching.

For example, in an embodiment of the present disclosure, it is assumed that the first time indication information is 24:00, then the satellite UE may perform the service beam switching at 24:00.

In another embodiment of the present disclosure, when the target beam and/or the target BWP indicated by the dedicated DCI signaling is detected in the step 302, the step 303 may be directly carried out to perform the service beam switching based on the target beam and/or the target BWP.

In summary, in the beam switching method according to embodiments of the present disclosure, the satellite UE may obtain the target beam and/or the target bandwidth part (BWP) corresponding to the satellite UE indicated by the base station, and perform the service beam switching based on the target beam and/or the target BWP, so that the beam switching may be performed quickly and accurately in an NTN system, ensuring a service continuity with a high efficiency.

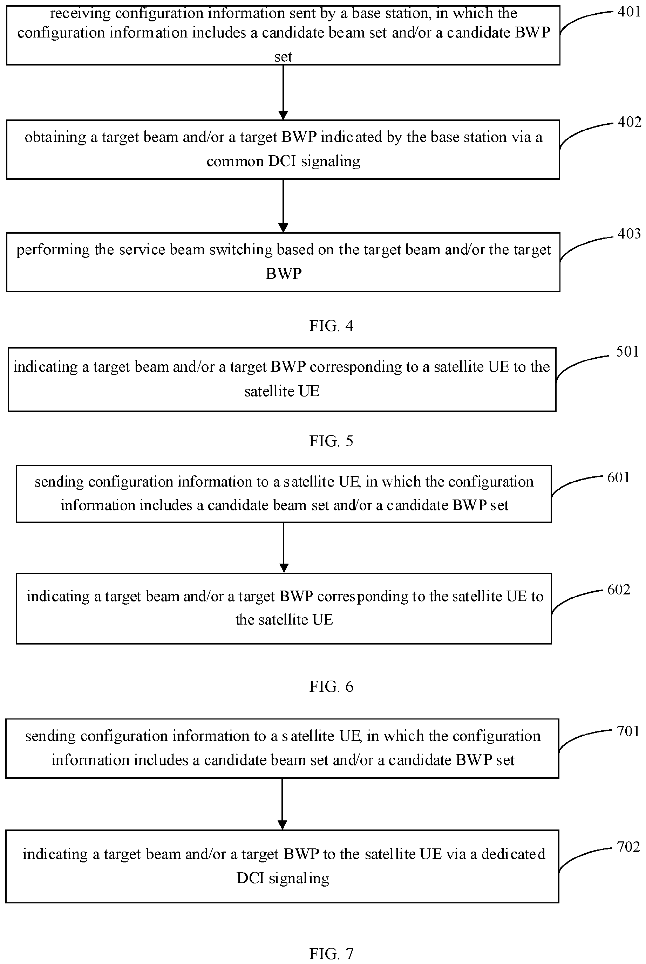

FIG. 4 is a schematic flowchart of a beam switching method according to another embodiment of the present disclosure, which is performed by a satellite UE. As shown in FIG. 4, the beam switching method may include the following steps.

In step 401, configuration information sent by a base station is received, and the configuration information includes a candidate beam set and/or a candidate BWP set.

When the configuration information includes the candidate beam set and the candidate BWP set, in case that a binding relationship is present between a candidate beam in the candidate beam set and a candidate BWP in the candidate BWP set, the configuration information further includes the binding relationship between the candidate beam and the candidate BWP.

For detailed introductions about the binding relationship for candidate BWPs in the candidate BWP set, reference may be made to the above embodiments, which will not be elaborated in embodiments of the present disclosure here.

In step 402, a target beam and/or a target BWP indicated by the base station via a common DCI signaling are obtained.

In an embodiment of the present disclosure, a method for obtaining the target beam and/or the target BWP indicated by the base station via the common DCI signaling may include: detecting the common DCI signaling obtained by the satellite UE to obtain the target beam and/or the target BWP indicated by the common DCI signaling.

Specifically, in an embodiment of the present disclosure, the common DCI signaling may only indicate the target beam. In another embodiment of the present disclosure, the common DCI signaling may only indicate the target BWP. In another embodiment of the present disclosure, the common DCI signaling may indicate the target beam and the target BWP.

In an embodiment of the present disclosure, a method for the satellite UE to detect the obtained common DCI signaling may include: obtaining detection information corresponding to the common DCI signaling sent by the base station, and detecting a latest common DCI signaling obtained by the satellite UE based on the detection information.

In an embodiment of the present disclosure, the detection information may include at least one of: a detection period, a detection time, an aggregation level, and a number of detections.

In an embodiment of the present disclosure, the detection information may only be any kind of the above detection information. In another embodiment of the present disclosure, the detection information may be a combination of any two kinds of the above detection information, a combination of any three kinds of the above detection information, or a combination of all the four kinds of the above detection information.

For example, in an embodiment of the present disclosure, it is assumed that the detection information includes the detection time, and the detection time is: performing a detection at 12:00 and 16:00 every day. Then, at 12:00 and 16:00 every day, the satellite UE may detect a current latest common DCI signaling obtained to obtain the target beam and/or the target BWP indicated by the latest common DCI signaling obtained.

Further, in another embodiment of the present disclosure, a method for detecting the common DCI signaling obtained by the satellite UE may include: periodically detecting a latest common DCI signaling obtained by the satellite UE. In an embodiment of the present disclosure, the detection period of the common DCI signaling may be pre-agreed.

In another embodiment of the present disclosure, the method for detecting the common DCI signaling obtained by the satellite UE may include: triggering a detection of the latest common DCI signaling obtained by the satellite UE based on a triggering event. The triggering event may include: a time-based triggering event.

In an embodiment of the present disclosure, the time-based triggering event may specifically be: determining whether to detect the latest common DCI signaling obtained by the satellite UE based on a preset service time of a current service beam and a served time of the current service beam of the satellite UE.

Specifically, in an embodiment of the present disclosure, a method for determining whether to detect the latest common DCI signaling obtained by the satellite UE based on the preset service time of the current service beam and the served time of the current service beam of the satellite UE may include: the satellite UE obtaining second time indication information sent by the base station. The second time indication information is configured to indicate the preset service time of the current service beam, and the satellite UE will also time the served time of the current service beam. When a difference between the preset service time and the served time of the current service beam of the satellite UE is less than a preset time threshold, it means that the current service beam is about to terminate its service, then it is determined that the satellite UE is about to need to perform the service beam switching. Therefore, the latest common DCI signaling obtained by the satellite UE may be detected to obtain the target beam and/or the target BWP indicated by the common DCI signaling.

For example, in an embodiment of the present disclosure, it is assumed that the preset service time of the current service beam of the satellite UE is 30 min, and the preset time threshold is 5 min, then when the served time of the current service beam of the satellite UE is greater than 25 min, it is determined that the latest common DCI signaling obtained by the satellite UE needs to be detected.

It should be noted that, in an embodiment of the present disclosure, the above second time indication information may directly be the preset service time of the current service beam. In another embodiment of the present disclosure, the second time indication information may be ephemeris information of a satellite, and the satellite UE may determine the preset service time of the current service beam based on the ephemeris information.

In step 403, the service beam switching is performed based on the target beam and/or the target BWP.

In an embodiment of the present disclosure, when the target beam and/or the target BWP indicated by the common DCI signaling is detected in the step 402, the step 403 may be directly carried out to perform the service beam switching based on the target beam and/or the target BWP.

In summary, in the beam switching method according to embodiments of the present disclosure, the satellite UE may obtain the target beam and/or the target bandwidth part (BWP) corresponding to the satellite UE indicated by the base station, and perform the service beam switching based on the target beam and/or the target BWP, so that the beam switching may be performed quickly and accurately in an NTN system, ensuring a service continuity with a high efficiency.

FIG. 5 is a schematic flowchart of a beam switching method according to another embodiment of the present disclosure, which is performed by a base station. As shown in FIG. 5, the beam switching method may include a following step.

In step 501, a target beam and/or a target BWP corresponding to a satellite UE are indicated to the satellite UE.

In an embodiment of the present disclosure, the target beam indicated by the base station to the satellite UE may be a certain service beam among a plurality of service beams within a coverage area of a satellite corresponding to the satellite UE, and the target BWP indicated by the base station to the satellite UE may be a BWP corresponding to a certain service beam among the plurality of service beams within the coverage area of the satellite corresponding to the satellite UE. In another embodiment of the present disclosure, the target beam indicated by the base station to the satellite UE may be a certain service beam among a plurality of service beams within a coverage area of other satellites, and the target BWP indicated by the base station to the satellite UE may be a BWP corresponding to a certain service beam among the plurality of service beams within the coverage area of other satellites.

In an embodiment of the present disclosure, a method for the base station to indicate to the satellite UE the target beam and/or the target BWP corresponding to the satellite UE may include: indicating the target beam and/or the target BWP to the satellite UE via a DCI signaling.

Specifically, in an implementation of the present disclosure, a method for the base station to indicate the target beam and/or the target BWP to the satellite UE via the DCI signaling may include: indicating the target beam and/or the target BWP to the satellite UE via a dedicated DCI signaling. In another embodiment of the present disclosure, the method for the base station to indicate the target beam and/or the target BWP to the satellite UE via the DCI signaling may specifically include: indicating the target beam and/or the target BWP to the satellite UE via a common DCI signaling.

Further, it should be noted that, in an embodiment of the present disclosure, the base station may only indicate the target beam to the satellite UE. In another embodiment of the present disclosure, the base station may only indicate the target BWP to the satellite UE. In another embodiment of the present disclosure, the base station may indicate the target beam and the target BWP to the satellite UE. When the base station indicates the target beam and the target BWP to the satellite UE, in an embodiment of the present disclosure, a binding relationship may be present between the target beam and the target BWP. In an embodiment of the present disclosure, it is also possible that no binding relationship is present between the target beam and the target BWP.

In summary, in the beam switching method according to embodiments of the present disclosure, the base station may indicate to the satellite UE the target beam and/or the target BWP corresponding to the satellite UE, and the satellite UE may perform the service beam switching based on the target beam and/or the target BWP, so that the beam switching may be performed quickly and accurately in an NTN system, ensuring a service continuity with a high efficiency.

FIG. 6 is a schematic flowchart of a beam switching method according to another embodiment of the present disclosure, which is performed by a base station. As shown in FIG. 6, the beam switching method may include the following steps.

In step 601, configuration information is sent to a satellite UE, and the configuration information includes a candidate beam set and/or a candidate BWP set.

When the configuration information includes the candidate beam set and the candidate BWP set, in case that a binding relationship is present between a candidate beam in the candidate beam set and a candidate BWP in the candidate BWP set, the configuration information further includes the binding relationship between the candidate beam and the candidate BWP.

For detailed introductions about the candidate beam set and/or the candidate BWP set, reference may be made to the above embodiments, which will not be elaborated in embodiments of the present disclosure here.

In step 602, a target beam and/or a target BWP corresponding to the satellite UE are indicated to the satellite UE.

For detailed introductions about the step 602, reference may be made to the relevant introductions in the above embodiments, which will not be elaborated in embodiments of the present disclosure here.

In summary, in the beam switching method according to embodiments of the present disclosure, the base station may indicate to the satellite UE the target beam and/or the target BWP corresponding to the satellite UE, and the satellite UE may perform the service beam switching based on the target beam and/or the target BWP, so that the beam switching may be performed quickly and accurately in an NTN system, ensuring a service continuity with a high efficiency.

FIG. 7 is a schematic flowchart of a beam switching method according to another embodiment of the present disclosure, which is performed by a base station. As shown in FIG. 7, the beam switching method may include the following steps.

In step 701, configuration information is sent to a satellite UE, and the configuration information includes a candidate beam set and/or a candidate BWP set.

When the configuration information includes the candidate beam set and the candidate BWP set, in case that a binding relationship is present between a candidate beam in the candidate beam set and a candidate BWP in the candidate BWP set, the configuration information further includes the binding relationship between the candidate beam and the candidate BWP.

In an embodiment of the present disclosure, for detailed introductions about the step 701, reference may be made to the relevant introductions in the above embodiments, which will not be elaborated in embodiments of the present disclosure here.

In step 702, a target beam and/or a target BWP are indicated to the satellite UE via a dedicated DCI signaling.

In an embodiment of the present disclosure, a method for the base station to indicate the target beam and/or the target BWP to the satellite UE via the dedicated DCI signaling may include that: the base station first sends detection information corresponding to the dedicated DCI signaling to the satellite UE, and then sends at least one dedicated DCI signaling to the satellite UE. The dedicated DCI signaling indicates the target beam and/or the target BWP. The satellite UE may detect a latest dedicated DCI signaling obtained according to the received detection information, so as to obtain the target beam and/or the target BWP indicated by the dedicated DCI signaling.

In an embodiment of the present disclosure, the detection information may include at least one of: a detection period, a detection time, an aggregation level, and a number of detections.

In another embodiment of the present disclosure, the detection information may only be any kind of the above detection information. In another embodiment of the present disclosure, the detection information may be a combination of any two kinds of the above detection information, a combination of any three kinds of the above detection information, or a combination of all the four kinds of the above detection information.

Further, in an embodiment of the present disclosure, a method for the dedicated DCI signaling sent by the base station to indicate the target beam and/or the target BWP may include, but is not limited to, the following manners.

Specifically, in an embodiment of the present disclosure, the dedicated DCI signaling sent by the base station may explicitly indicate the target beam and/or the target BWP. In an embodiment of the present disclosure, an explicit indication method may be to directly use an information field in the dedicated DCI signaling to indicate the target beam and/or the target BWP to the satellite UE.

Specifically, in an embodiment of the present disclosure, the dedicated DCI signaling may only explicitly indicate the target beam. In another embodiment of the present disclosure, the dedicated DCI signaling may only explicitly indicate the target BWP. In another embodiment of the present disclosure, the dedicated DCI signaling may explicitly indicate the target BWP and the target beam.

In another embodiment of the present disclosure, the dedicated DCI signaling sent by the base station may implicitly indicate the target beam and/or the target BWP. In an embodiment of the present disclosure, an implicit indication method may be an implicit indication using an RNTI. In another embodiment of the present disclosure, the implicit indication method may be an implicit indication using a scrambling sequence.

Specifically, in an embodiment of the present disclosure, the dedicated DCI signaling may only implicitly indicate the target beam. In another embodiment of the present disclosure, the dedicated DCI signaling may only implicitly indicate the target BWP. In another embodiment of the present disclosure, the dedicated DCI signaling may implicitly indicate the target BWP and the target beam.

It should be noted that when the base station uses the dedicated DCI signaling to implicitly indicate the target BWP and the target beam, in an embodiment of the present disclosure, an implicit indication manner of the target beam and an implicit indication manner of the target BWP may be the same. In another embodiment of the present disclosure, the implicit indication manner of the target beam may be different from the implicit indication manner of the target BWP.

Furthermore, in an embodiment of the present disclosure, the dedicated DCI signaling sent by the base station may jointly indicate the target beam and the target BWP using an explicit indication and an implicit indication.

Specifically, in an embodiment of the present disclosure, jointly indicating the target beam and the target BWP to the satellite UE using the explicit indication and the implicit indication via the dedicated DCI signaling may include: explicitly indicating the target beam and implicitly indicating the target BWP via the dedicated DCI signaling.

In another embodiment of the present disclosure, jointly indicating the target beam and the target BWP to the satellite UE using the explicit indication and the implicit indication via the dedicated DCI signaling may include: explicitly indicating the target BWP and implicitly indicating the target beam via the dedicated DCI signaling.

Further, it should be noted that, in an embodiment of the present disclosure, when the base station indicates the target beam and/or the target BWP via the dedicated DCI signaling, the dedicated DCI signaling may further include first time indication information, and the first time indication information is configured to indicate an execution time of a service beam switching. Subsequently, the satellite UE may perform the service beam switching based on the first time indication information.

In summary, in the beam switching method according to embodiments of the present disclosure, the base station may indicate to the satellite UE the target beam and/or the target BWP corresponding to the satellite UE, and the satellite UE may perform the service beam switching based on the target beam and/or the target BWP, so that the beam switching may be performed quickly and accurately in an NTN system, ensuring a service continuity with a high efficiency.

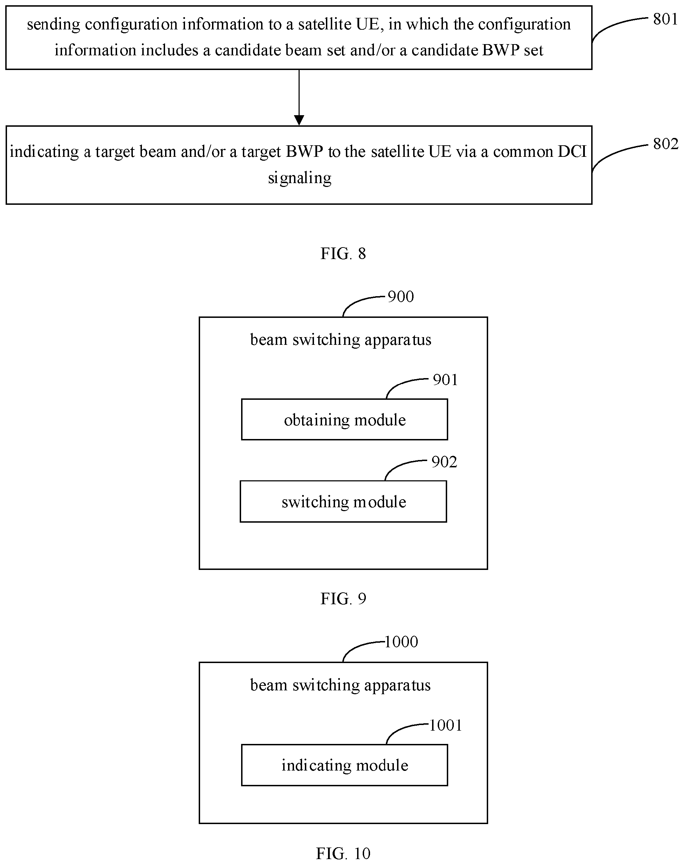

FIG. 8 is a schematic flowchart of a beam switching method according to another embodiment of the present disclosure, which is performed by a base station. As shown in FIG. 8, the beam switching method may include the following steps.

In step 801, configuration information is sent to a satellite UE, and the configuration information includes a candidate beam set and/or a candidate BWP set.

When the configuration information includes the candidate beam set and the candidate BWP set, in case that a binding relationship is present between a candidate beam in the candidate beam set and a candidate BWP in the candidate BWP set, the configuration information further includes the binding relationship between the candidate beam and the candidate BWP.

In an embodiment of the present disclosure, for detailed introductions about the step 801, reference may be made to the relevant introductions in the above embodiments, which will not be elaborated in embodiments of the present disclosure here.

In step 802, a target beam and/or a target BWP are indicated to the satellite UE via a common DCI signaling.

In an embodiment of the present disclosure, the base station may only indicate the target beam to the satellite UE via the common DCI signaling. In another embodiment of the present disclosure, the base station may only indicate the target BWP to the satellite UE via the common DCI signaling. In another embodiment of the present disclosure, the base station may indicate the target beam and the target BWP to the satellite UE via the common DCI signaling.

Further, in an embodiment of the present disclosure, a method for the base station to indicate the target beam and/or the target BWP to the satellite UE via the common DCI signaling may include that: the base station first sends detection information corresponding to the common DCI signaling to the satellite UE, and then sends at least one common DCI signaling to the satellite UE. The common DCI signaling indicates the target beam and/or the target BWP. The satellite UE may detect a latest common DCI signaling obtained according to the received detection information, so as to obtain the target beam and/or the target BWP indicated by the common DCI signaling.

In an embodiment of the present disclosure, the detection information may include at least one of: a detection period, a detection time, an aggregation level, and a number of detections.

In another embodiment of the present disclosure, the detection information may only be any kind of the above detection information. In another embodiment of the present disclosure, the detection information may be a combination of any two kinds of the above detection information, a combination of any three kinds of the above detection information, or a combination of all the four kinds of the above detection information.

Further, in an embodiment of the present disclosure, a method for the base station to indicate the target beam and/or the target BWP to the satellite UE via the common DCI signaling may include that: the base station sends at least one common DCI signaling to the satellite UE, and the common DCI signaling indicates the target beam and/or the target BWP. The satellite UE may directly and periodically detect the latest common DCI signaling obtained, so as to obtain the target beam and/or the target BWP indicated by the common DCI signaling.

Furthermore, in an embodiment of the present disclosure, the method for the base station to indicate the target beam and/or the target BWP to the satellite UE via the common DCI signaling may include that: the base station first sends second time indication information to the satellite UE, and then sends at least one common DCI signaling to the satellite UE, the second time indication information is configured to indicate a preset service time of a current service beam, and the common DCI signaling indicates the target beam and/or the target BWP, so that the satellite UE may determine whether to detect the latest common DCI signaling obtained by the satellite UE based on the second time indication information to obtain the target beam and/or the target BWP indicated by the common DCI signaling.

In an embodiment of the present disclosure, the second time indication information may directly be the preset service time of the current service beam. In another embodiment of the present disclosure, the second time indication information may be ephemeris information of a satellite, so that the satellite UE may determine the preset service time of the current service beam based on the ephemeris information.

In summary, in the beam switching method according to embodiments of the present disclosure, the base station may indicate to the satellite UE the target beam and/or the target BWP corresponding to the satellite UE, and the satellite UE may perform the service beam switching based on the target beam and/or the target BWP, so that the beam switching may be performed quickly and accurately in an NTN system, ensuring a service continuity with a high efficiency.

FIG. 9 is a schematic block diagram of a beam switching apparatus according to an embodiment of the present disclosure. As shown in FIG. 10, the apparatus 900 may include: an obtaining module 901 and a switching module 902.

The obtaining module 901 is configured to obtain a target beam and/or a target BWP corresponding to a satellite UE indicated by a base station.

The switching module 902 is configured to perform a service beam switching based on the target beam and/or the target BWP.

In summary, in the beam switching apparatus according to embodiments of the present disclosure, the satellite UE may obtain the target beam and/or the target bandwidth part (BWP) corresponding to the satellite UE indicated by the base station, and perform the service beam switching based on the target beam and/or the target BWP, so that the beam switching may be performed quickly and accurately in an NTN system, ensuring a service continuity with a high efficiency.

In an embodiment of the present disclosure, the above apparatus is further configured to: receive configuration information sent by the base station. The configuration information includes a candidate beam set and/or a candidate BWP set.

When the configuration information includes the candidate beam set and the candidate BWP set, in case that a binding relationship is present between a candidate beam in the candidate beam set and a candidate BWP in the candidate BWP set, the configuration information further includes the binding relationship between the candidate beam and the candidate BWP.

Further, in another embodiment of the present disclosure, the above obtaining module 901 is further configured to: obtain the target beam and/or the target BWP indicated by the base station via a DCI signaling.

Further, in another embodiment of the present disclosure, the above obtaining module 901 is further configured to: obtain the target beam and/or the target BWP indicated by the base station via a dedicated DCI signaling.

Further, in another embodiment of the present disclosure, the above obtaining module 901 is further configured to: obtain the target beam and the target BWP which are explicitly indicated by the dedicated DCI signaling.

Further, in another embodiment of the present disclosure, the above obtaining module 901 is further configured to: obtain the target beam indicated by a first information field of the dedicated DCI signaling and the target BWP indicated by a second information field of the dedicated DCI signaling.

Further, in another embodiment of the present disclosure, the dedicated DCI signaling further includes first time indication information, and the first time indication information is configured to indicate an execution time of the service beam switching.

Further, in another embodiment of the present disclosure, the above obtaining module 901 is further configured to: obtain the target beam explicitly indicated by the dedicated DCI signaling and the target BWP implicitly indicated by the dedicated DCI signaling.

Further, in another embodiment of the present disclosure, the above obtaining module 901 is further configured to: obtain the target beam explicitly indicated by a third information field of the dedicated DCI signaling, and obtain the target BWP implicitly indicated by an RNTI in the dedicated DCI signaling.

Further, in another embodiment of the present disclosure, the above obtaining module 901 is further configured to: obtain the target beam explicitly indicated by a third information field of the dedicated DCI signaling, and obtain the target BWP implicitly indicated by a scrambling sequence in the dedicated DCI signaling.

Further, in another embodiment of the present disclosure, the above obtaining module 901 is further configured to: obtain the target BWP explicitly indicated by the dedicated DCI signaling and the target beam implicitly indicated by the dedicated DCI signaling.

Further, in another embodiment of the present disclosure, the above obtaining module 901 is further configured to: obtain the target BWP explicitly indicated by a third information field of the dedicated DCI signaling, and obtain the target beam implicitly indicated by an RNTI in the dedicated DCI signaling.

Further, in another embodiment of the present disclosure, the above obtaining module 901 is further configured to: obtain the target BWP explicitly indicated by a third information field of the dedicated DCI signaling, and obtain the target beam implicitly indicated by a scrambling sequence in the dedicated DCI signaling.

Further, in another embodiment of the present disclosure, the above obtaining module 901 is further configured to: detect a dedicated DCI signaling obtained by the satellite UE to obtain the target beam and/or the target BWP indicated by the dedicated DCI signaling.

Further, in another embodiment of the present disclosure, the above apparatus is further configured to: obtain detection information corresponding to the dedicated DCI signaling sent by the base station; and detect the dedicated DCI signaling obtained by the satellite UE based on the detection information. The detection information includes at least one of: a detection period, a detection time, an aggregation level, and a number of detections

Further, in another embodiment of the present disclosure, the above obtaining module 901 is further configured to: obtain the target beam and/or the target BWP indicated by the base station via a common DCI signaling.

Further, in another embodiment of the present disclosure, the above obtaining module 901 is further configured to: detect a common DCI signaling obtained by the satellite UE to obtain the target beam and/or the target BWP.

Further, in another embodiment of the present disclosure, the above apparatus is further configured to: obtain detection information corresponding to the common DCI signaling sent by the base station; and detect the common DCI signaling obtained by the satellite UE based on the detection information. The detection information includes at least one of: a detection period, a detection time, an aggregation level, and a number of detections.

Further, in another embodiment of the present disclosure, the above apparatus is further configured to: periodically detect the common DCI signaling obtained by the satellite UE.

Further, in another embodiment of the present disclosure, the above apparatus is further configured to: trigger a detection of the common DCI signaling obtained by the satellite UE based on a triggering event. The triggering event includes: a time-based triggering event.

Further, in an embodiment of the present disclosure, the time-based triggering event includes: determining whether to detect the common DCI signaling obtained by the satellite UE based on a preset service time of a current service beam and a served time of the current service beam of the satellite UE.

Further, in another embodiment of the present disclosure, the above apparatus is further configured to: obtain second time indication information sent by the base station. The second time indication information is configured to indicate the preset service time of the current service beam.

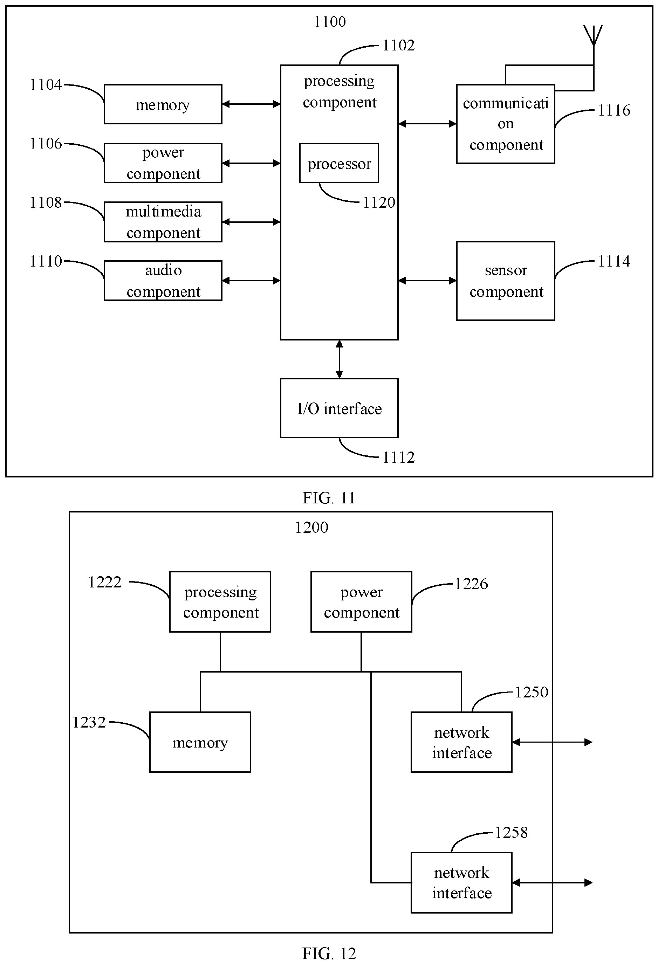

FIG. 10 is a schematic block diagram of a beam switching apparatus according to another embodiment of the present disclosure. As shown in FIG. 11, the apparatus 1000 may include: an indicating module 1001.

The indicating module 1001 is configured to indicate a target beam and/or a target BWP corresponding to a satellite UE to the satellite UE.

In summary, in the beam switching apparatus according to embodiments of the present disclosure, the base station may indicate to the satellite UE the target beam and/or the target BWP corresponding to the satellite UE, and the satellite UE may perform the service beam switching based on the target beam and/or the target BWP, so that the beam switching may be performed quickly and accurately in an NTN system, ensuring a service continuity with a high efficiency.

In an embodiment of the present disclosure, the above apparatus is further configured to: send configuration information to the satellite UE. The configuration information includes a candidate beam set and/or a candidate BWP set.

When the configuration information includes the candidate beam set and the candidate BWP set, in case that a binding relationship is present between a candidate beam in the candidate beam set and a candidate BWP in the candidate BWP set, the configuration information further includes the binding relationship between the candidate beam and the candidate BWP.

Further, in another embodiment of the present disclosure, the above indicating module 1001 is further configured to: indicate the target beam and/or the target BWP to the satellite UE via a DCI signaling.

Further, in another embodiment of the present disclosure, the above indicating module 1001 is further configured to: indicate the target beam and/or the target BWP to the satellite UE via a dedicated DCI signaling.

Further, in another embodiment of the present disclosure, the above indicating module 1001 is further configured to: explicitly indicate the target beam and the target BWP to the satellite UE via the dedicated DCI signaling.

Further, in another embodiment of the present disclosure, the above indicating module 1001 is further configured to: indicate the target beam via a first information field of the dedicated DCI signaling, and indicate the target BWP via a second information field of the dedicated DCI signaling.

Further, in another embodiment of the present disclosure, the dedicated DCI signaling further includes first time indication information, and the first time indication information is configured to indicate an execution time of the service beam switching.

Further, in another embodiment of the present disclosure, the above indicating module 1001 is further configured to: explicitly indicate the target beam to the satellite UE via the dedicated DCI signaling, and implicitly indicate the target BWP to the satellite UE via the dedicated DCI signaling.

Further, in another embodiment of the present disclosure, the above indicating module 1001 is further configured to: explicitly indicate the target beam via a third information field of the dedicated DCI signaling, and implicitly indicate the target BWP via an RNTI in the dedicated DCI signaling.

Further, in another embodiment of the present disclosure, the above indicating module 1001 is further configured to: explicitly indicate the target beam via a third information field of the dedicated DCI signaling, and implicitly indicate the target BWP via a scrambling sequence in the dedicated DCI signaling.

Further, in another embodiment of the present disclosure, the above indicating module 1001 is further configured to: explicitly indicate the target BWP to the satellite UE via the dedicated DCI signaling, and implicitly indicate the target beam to the satellite UE via the dedicated DCI signaling.

Further, in another embodiment of the present disclosure, the above indicating module 1001 is further configured to: explicitly indicate the target BWP via a third information field of the dedicated DCI signaling, and implicitly indicate the target beam via an RNTI in the dedicated DCI signaling.

Further, in another embodiment of the present disclosure, the above indicating module 1001 is further configured to: explicitly indicate the target BWP via a third information field of the dedicated DCI signaling, and implicitly indicate the target beam via a scrambling sequence in the dedicated DCI signaling.

Further, in another embodiment of the present disclosure, the above apparatus is further configured to: send detection information corresponding to the dedicated DCI signaling to the satellite UE. The detection information includes at least one of: a detection period, a detection time, an aggregation level, and a number of detections.

Further, in another embodiment of the present disclosure, the above indicating module 1001 is further configured to: indicate the target beam and/or the target BWP to the satellite UE via a common DCI signaling.

Further, in another embodiment of the present disclosure, the above apparatus is further configured to: send detection information corresponding to the common DCI signaling to the satellite UE. The detection information includes at least one of: a detection period, a detection time, an aggregation level, and a number of detections.

Further, in another embodiment of the present disclosure, the above apparatus is further configured to: send second time indication information to the satellite UE. The second time indication information is configured to indicate a preset service time of a current service beam.

A computer storage medium according to embodiments of the present disclosure has stored therein an executable program that, when executed by a processor, enables the method shown in any one of FIG. 1 to FIG. 4 or FIG. 5 to FIG. 8 to be implemented.

In order to implement the above embodiments, the present disclosure also provides a computer program product including a computer program that, when executed by a processor, causes the method shown in any one of FIG. 1 to FIG. 4 or FIG. 5 to FIG. 8 to be implemented.

In addition, in order to implement the above embodiments, the present disclosure also provides a computer program that, when executed by a processor, causes the method shown in any one of FIG. 1 to FIG. 4 or FIG. 5 to FIG. 8 to be implemented.

FIG. 11 is a block diagram of a user equipment (UE) 1200 according to an embodiment of the present disclosure. For example, the UE 1200 may be a mobile phone, a computer, a digital broadcast terminal device, a messaging device, a game console, a tablet device, a medical device, a fitness device, a personal digital assistant, or the like.

Referring to FIG. 11, the UE 1100 may include at least one of the following components: a processing component 1102, a memory 1104, a power component 1106, a multimedia component 1108, an audio component 1110, an input/output (I/O) interface 1112, a sensor component 1113, and a communication component 1116.

The processing component 1102 typically controls overall operations of the UE 1100, such as the operations associated with display, phone calls, data communications, camera operations, and recording operations. The processing component 1102 may include at least one processor 1120 to execute instructions to perform all or some of the steps in the above-described methods. Moreover, the processing component 1102 may include at least one module which facilitates the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the UE 1100. Examples of such data include instructions for any applications or methods operated on the UE 1100, contact data, phonebook data, messages, pictures, videos, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the UE 1100. The power component 1106 may include a power management system, at least one power source, and any other components associated with the generation, management, and distribution of power in the UE 1100.

The multimedia component 1108 includes a screen providing an output interface between the UE 1100 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a wake-up time and a pressure associated with the touch or swipe action. In some embodiments, the multimedia component 1108 includes a front camera and/or a rear camera. The front camera and/or the rear camera may receive an external multimedia datum while the UE 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the UE 1100 is in an operation mode, such as a call mode, a recording mode, and a voice recognition mode. The received audio signal may be further stored in the memory 1104 or sent via the communication component 1116. In some embodiments, the audio component 1110 further includes a speaker to output audio signals.

The I/O interface 1112 provides an interface between the processing component 1102 and peripheral interface modules, such as keyboards, click wheels, buttons, and the like. The buttons may include, but are not limited to, a home button, a volume button, a starting button, and a locking button.

The sensor component 1113 includes at least one sensor to provide status assessments of various aspects of the UE 1100. For instance, the sensor component 1113 may detect an open/closed status of the UE 1100, relative positioning of components, e.g., the display and the keypad, of the UE 1100, a change in position of the UE 1100 or a component of the UE 1100, a presence or absence of user contact with the UE 1100, an orientation or an acceleration/deceleration of the UE 1100, and a change in temperature of the UE 1100. The sensor component 1113 may include a proximity sensor configured to detect the presence of nearby objects without any physical contact. The sensor component 1113 may further include a light sensor, such as a CMOS or CCD image sensor, for use in imaging applications. In some embodiments, the sensor component 1113 may further include an accelerometer sensor, a gyroscope sensor, a magnetic sensor, a pressure sensor, or a temperature sensor.

The communication component 1116 is configured to facilitate communication, wired or wireless, between the UE 1100 and other devices. The UE 1100 can access a wireless network based on a communication standard, such as WiFi, 2G, or 3G, or a combination thereof. In an illustrative embodiment, the communication component 1116 receives a broadcast signal or broadcast associated information from an external broadcast management system via a broadcast channel. In an illustrative embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned method.

FIG. 12 is a block diagram of a base station 1200 according to an embodiment of the present disclosure. For example, the base station 1200 may be provided as a base station. Referring to FIG. 12, the base station 1200 includes a processing component 1211, which further includes at least one processor, and a memory resource represented by a memory 1232 for storing instructions executable by the processing component 1222, such as application programs. The application programs stored in the memory 1232 may include one or more modules each corresponding to a set of instructions. In addition, the processing component 1215 is configured to execute instructions, so as to execute any of the aforementioned methods applied to the base station, for example, the method shown in FIG. 1.

The base station 1200 further includes a power component 1226 configured to execute power management of the base station 1200, a wired or wireless network interface 1250 configured to connect the base station 1200 to the network, and an input/output (I/O) interface 1258. The base station 1200 may operate an operating system stored in the memory 1232, such as Windows Server TM, Mac OS XTM, Unix TM, Linux TM, Free BSDTM, or the like.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A beam switching method, performed by a satellite user equipment (UE) and comprising:
obtaining a target beam and/or a target bandwidth part (BWP) corresponding to the satellite UE indicated by a base station; and
performing a service beam switching based on the target beam and/or the target BWP.

2. The method according to claim 1, further comprising:
receiving configuration information sent by the base station, wherein the configuration information comprises a candidate beam set and/or a candidate BWP set;
wherein in case that a binding relationship is present between a candidate beam in the candidate beam set and a candidate BWP in the candidate BWP set when the configuration information comprises the candidate beam set and the candidate BWP set, the configuration information further comprises the binding relationship between the candidate beam and the candidate BWP.

3. The method according to claim 1, wherein obtaining the target beam and/or the target BWP corresponding to the satellite UE indicated by the base station comprises:
obtaining the target beam and/or the target BWP indicated by the base station via a downlink control information (DCI) signaling.

4. The method according to claim 3, wherein obtaining the target beam and/or the target BWP indicated by the base station via the DCI signaling comprises:
obtaining the target beam and/or the target BWP indicated by the base station via a dedicated DCI signaling.

5. The method according to claim 4, wherein obtaining the target beam and the target BWP indicated by the base station via the dedicated DCI signaling comprises:
obtaining the target beam and the target BWP which are explicitly indicated by the dedicated DCI signaling.

6. The method according to claim 5, wherein obtaining the target beam and the target BWP which are explicitly indicated by the dedicated DCI signaling comprises:
obtaining the target beam indicated by a first information field of the dedicated DCI signaling and the target BWP indicated by a second information field of the dedicated DCI signaling.

7. The method according to claim 5, wherein the dedicated DCI signaling further comprises first time indication information, and the first time indication information is configured to indicate an execution time of the service beam switching;
the method further comprises:
performing the service beam switching based on the first time indication information, the target beam and the target BWP.

8. The method according to claim 4, wherein obtaining the target beam and the target BWP indicated by the base station via the dedicated DCI signaling comprises:
obtaining the target beam explicitly indicated by the dedicated DCI signaling and the target BWP implicitly indicated by the dedicated DCI signaling.

9. The method according to claim 8, wherein obtaining the target beam explicitly indicated by the dedicated DCI signaling and the target BWP implicitly indicated by the dedicated DCI signaling comprises:
obtaining the target beam explicitly indicated by a third information field of the dedicated DCI signaling, and obtaining the target BWP implicitly indicated by a radio network temporary identifier (RNTI) in the dedicated DCI signaling.

10. The method according to claim 8, wherein obtaining the target beam explicitly indicated by the dedicated DCI signaling and the target BWP implicitly indicated by the dedicated DCI signaling comprises:
obtaining the target beam explicitly indicated by a third information field of the dedicated DCI signaling, and obtaining the target BWP implicitly indicated by a scrambling sequence in the dedicated DCI signaling.

11. The method according to claim 4, wherein obtaining the target beam and the target BWP indicated by the base station via the dedicated DCI signaling comprises:
obtaining the target BWP explicitly indicated by the dedicated DCI signaling and the target beam implicitly indicated by the dedicated DCI signaling.

12. The method according to claim 11, wherein obtaining the target BWP explicitly indicated by the dedicated DCI signaling and the target beam implicitly indicated by the dedicated DCI signaling comprises:
obtaining the target BWP explicitly indicated by a third information field of the dedicated DCI signaling, and obtaining the target beam implicitly indicated by an RNTI in the dedicated DCI signaling.

13. The method according to claim 11, wherein obtaining the target beam explicitly indicated by the dedicated DCI signaling and the target BWP implicitly indicated by the dedicated DCI signaling comprises:
obtaining the target BWP explicitly indicated by a third information field of the dedicated DCI signaling, and obtaining the target beam implicitly indicated by a scrambling sequence in the dedicated DCI signaling.

14. The method according to claim 4, wherein obtaining the target beam and/or the target BWP indicated by the base station via the dedicated DCI signaling comprises:
detecting a dedicated DCI signaling obtained by the satellite UE to obtain the target beam and/or the target BWP indicated by the dedicated DCI signaling.

15. The method according to claim 14, wherein detecting the dedicated DCI signaling comprises:
obtaining detection information corresponding to the dedicated DCI signaling sent by the base station, wherein the detection information comprises at least one of: a detection period, a detection time, an aggregation level, and a number of detections; and
detecting the dedicated DCI signaling obtained by the satellite UE based on the detection information.

16. The method according to claim 3, wherein obtaining the target beam and/or the target BWP indicated by the base station via the DCI signaling comprises:
obtaining the target beam and/or the target BWP indicated by the base station via a common DCI signaling.

17. The method according to claim 16, wherein obtaining the target beam and/or the target BWP indicated by the base station via the common DCI signaling comprises:
detecting a common DCI signaling obtained by the satellite UE to obtain the target beam and/or the target BWP.

18. The method according to claim 17, wherein detecting the common DCI signaling comprises:
obtaining detection information corresponding to the common DCI signaling sent by the base station, wherein the detection information comprises at least one of: a detection period, a detection time, an aggregation level, and a number of detections; and
detecting the common DCI signaling obtained by the satellite UE based on the detection information.

19. The method according to claim 17, wherein detecting the common DCI signaling comprises:
periodically detecting the common DCI signaling obtained by the satellite UE.

20. The method according to claim 18, wherein detecting the common DCI signaling comprises:
triggering a detection of the common DCI signaling obtained by the satellite UE based on a triggering event; wherein the triggering event comprises: a time-based triggering event.

21. The method according to claim 20, wherein the time-based triggering event comprises:
determining whether to detect the common DCI signaling obtained by the satellite UE based on a preset service time of a current service beam and a served time of the current service beam of the satellite UE.

22. The method according to claim 21, further comprising:
obtaining second time indication information sent by the base station, wherein the second time indication information is configured to indicate the preset service time of the current service beam.

23. A beam switching method, performed by a base station and comprising:
indicating a target beam and/or a target BWP corresponding to a satellite UE to the satellite UE.

24. The method according to claim 23, further comprising:
sending configuration information to the satellite UE, wherein the configuration information comprises a candidate beam set and/or a candidate BWP set;
wherein in case that a binding relationship is present between a candidate beam in the candidate beam set and a candidate BWP in the candidate BWP set when the configuration information comprises the candidate beam set and the candidate BWP set, the configuration information further comprises the binding relationship between the candidate beam and the candidate BWP.

25. The method according to claim 23, wherein indicating the target beam and/or the target BWP corresponding to the satellite UE to the satellite UE comprises:
indicating the target beam and/or the target BWP to the satellite UE via a DCI signaling.

26. The method according to claim 25, wherein indicating the target beam and/or the target BWP to the satellite UE via the DCI signaling comprises:
indicating the target beam and/or the target BWP to the satellite UE via a dedicated DCI signaling.

27. The method according to claim 26, wherein indicating the target beam and the target BWP to the satellite UE via the dedicated DCI signaling comprises:
explicitly indicating the target beam and the target BWP to the satellite UE via the dedicated DCI signaling.

28. The method according to claim 27, wherein explicitly indicating the target beam and the target BWP to the satellite UE via the dedicated DCI signaling comprises:
indicating the target beam via a first information field of the dedicated DCI signaling, and indicating the target BWP via a second information field of the dedicated DCI signaling.

29. The method according to claim 27, wherein the dedicated DCI signaling further comprises first time indication information, and the first time indication information is configured to indicate an execution time of a service beam switching.

30. The method according to claim 26, wherein indicating the target beam and the target BWP to the satellite UE via the dedicated DCI signaling comprises:
explicitly indicating the target beam to the satellite UE via the dedicated DCI signaling, and implicitly indicating the target BWP to the satellite UE via the dedicated DCI signaling.

31. The method according to claim 30, wherein explicitly indicating the target beam to the satellite UE via the dedicated DCI signaling and implicitly indicating the target BWP to the satellite UE via the dedicated DCI signaling comprise:
explicitly indicating the target beam via a third information field of the dedicated DCI signaling, and implicitly indicating the target BWP via an RNTI in the dedicated DCI signaling.

32. The method according to claim 30, wherein explicitly indicating the target beam to the satellite UE via the dedicated DCI signaling and implicitly indicating the target BWP to the satellite UE via the dedicated DCI signaling comprise:
explicitly indicating the target beam via a third information field of the dedicated DCI signaling, and implicitly indicating the target BWP via a scrambling sequence in the dedicated DCI signaling.

33. The method according to claim 26, wherein indicating the target beam and the target BWP to the satellite UE via the dedicated DCI signaling comprises:
explicitly indicating the target BWP to the satellite UE via the dedicated DCI signaling, and implicitly indicating the target beam to the satellite UE via the dedicated DCI signaling.

34. The method according to claim 33, wherein explicitly indicating the target BWP to the satellite UE via the dedicated DCI signaling and implicitly indicating the target beam to the satellite UE via the dedicated DCI signaling comprise:
explicitly indicating the target BWP via a third information field of the dedicated DCI signaling, and implicitly indicating the target beam via an RNTI in the dedicated DCI signaling.

35. The method according to claim 33, wherein explicitly indicating the target BWP to the satellite UE via the dedicated DCI signaling and implicitly indicating the target beam to the satellite UE via the dedicated DCI signaling comprise:
explicitly indicating the target BWP via a third information field of the dedicated DCI signaling, and implicitly indicating the target beam via a scrambling sequence in the dedicated DCI signaling.

36. The method according to claim 26, further comprising:
sending detection information corresponding to the dedicated DCI signaling to the satellite UE, wherein the detection information comprises at least one of: a detection period, a detection time, an aggregation level, and a number of detections.

37. The method according to claim 25, wherein indicating the target beam and/or the target BWP to the satellite UE via the DCI signaling comprises:
indicating the target beam and/or the target BWP to the satellite UE via a common DCI signaling.

38. The method according to claim 37, further comprising:
sending detection information corresponding to the common DCI signaling to the satellite UE, wherein the detection information comprises at least one of: a detection period, a detection time, an aggregation level, and a number of detections.

39. The method according to claim 37, further comprising:
sending second time indication information to the satellite UE, wherein the second time indication information is configured to indicate a preset service time of a current service beam.

40. A beam switching apparatus, comprising:
an obtaining module configured to obtain a target beam and/or a target bandwidth part (BWP) corresponding to a satellite UE indicated by a base station; and
a switching module configured to perform a service beam switching based on the target beam and/or the target BWP.

41. A beam switching apparatus, comprising:
an indicating module configured to indicate a target beam and/or a target BWP corresponding to a satellite UE to the satellite UE.

42. A user equipment, comprising:
a transceiver;
a memory; and
a processor,
wherein the processor is connected to the transceiver and the memory respectively, and configured to control a transmission and a reception of a wireless signal of the transceiver and enable the method according to any one of claims 1 to 22 to be implemented by executing computer-executable instructions on the memory.

43. A base station, comprising:
a transceiver;
a memory; and
a processor,
wherein the processor is connected to the transceiver and the memory respectively, and configured to control a transmission and a reception of a wireless signal of the transceiver and enable the method according to any one of claims 23 to 39 to be implemented by executing computer-executable instructions on the memory.

44. A computer storage medium having stored therein computer-executable instructions that, when executed by a processor, enable the method according to any one of claims 1 to 22 or claims 23 to 39 to be implemented.
